Europäisches Patentamt

European Patent Office

Office européen des brevets

(19)

(11) Veröffentlichungsnummer: **0 147 637**
**A2**

(12) # EUROPÄISCHE PATENTANMELDUNG

(21) Anmeldenummer: **84114234.2**

(51) Int. Cl.⁴: **B 23 K 9/06**

(22) Anmeldetag: **24.11.84**

(30) Priorität: **26.11.83 DE 3342932**

(43) Veröffentlichungstag der Anmeldung:
**10.07.85 Patentblatt 85/28**

(84) Benannte Vertragsstaaten:
**AT BE CH DE FR GB IT LI NL SE**

(71) Anmelder: **Carl Cloos Schweisstechnik GmbH**
**Postfach 121**
**D-6342 Haiger(DE)**

(72) Erfinder: **Cloos, Erwin**
**Bergstrasse 2**
**D-6342 Haiger(DE)**

(72) Erfinder: **Gläser, Helmut**
**Hauptstrasse 125**
**Dillenburg-Niederscheld(DE)**

(72) Erfinder: **Spintig, Heinz**
**Hosrain 19**
**D-6342 Haiger-Allendorf(DE)**

(72) Erfinder: **Becker, Kurt**
**Kurtenbach 11**
**D-6342 Haiger-Oberrossbach(DE)**

(72) Erfinder: **Stöcklein, Erich**
**Oranienstrasse 24**
**D-6342 Haiger-Rodenbach(DE)**

(72) Erfinder: **Klinkhammer, Paul**
**Am Krenzel 4**
**D-6342 Haiger-Fellerdilln(DE)**

(74) Vertreter: **Missling, Arne, Dipl.-Ing. et al,**
**Patentanwälte Dipl.-Ing. R. Schlee Dipl.-Ing. A. Missling**
**Bismarckstrasse 43**
**D-6300 Giessen(DE)**

(54) **Verfahren zum stossfreien Zünden beim MIG-MAG-Schweissen.**

(57) Um beim MIG-MAG-Schweißen von kontinuierlich nachgeführten Drahtelektroden ein stoßfreies Zünden des Lichtbogens zu erhalten, wobei sowohl ein mechanisches Aufstoßen der Drahtelektrode auf das Werkstück wie auch ein hoher Kurzschlußstrom beim Zünden vermieden wird, wird zwischen Schweißdraht (19) und Werkstück (18) eine hochfrequente Hochspannung angelegt, deren Zündfolge so auf die Drahvorschubgeschwindigkeit abgestimmt ist, daß beim Durchfahren des Drahtes von einer Strecke von ca. 5 mm mehrere Zündimpulse zum Aufbau eines Start-Lichtbogens abgegeben werdern.

EP 0 147 637 A2

./...

Patentanwälte

Dipl.-Ing. Richard Schlee
Dipl.-Ing. Arne Missling

6300 Lahn-Gießen 763711.1984
Bismarckstrasse 43
Telefon: (0641) 71019

— 1 —

Mi|H 84 085 PM

Carl Cloos Schweißtechnik GmbH
6342 Haiger

## Verfahren zum stoßfreien Zünden beim MIG-MAG-Schweißen

Die Erfindung betrifft ein Verfahren zum stoßfreien Zünden
beim MIG-MAG-Schweißen von kontinuierlich nachgeführten
Drahtelektroden.

Bei den bekannten teil- oder vollmechanisierten Lichtbogenschweißverfahren, insbesondere beim MIG-MAG-Schweißen, ist
es im allgemeinen recht schwierig, den Lichtbogen zu zünden,
weil die Leerlaufspannungen nicht allzuviel größer sind als
die Schweißspannungen und weil die Drahtelektrode mit erheblicher Geschwindigkeit (1,8 - 20 m|min.) gegen das Werkstück
gefahren wird. Um hier ein einwandfreies Zünden zu erreichen,
ist man gezwungen, den Draht für den Zündvorgang wesentlich
langsamer als beim nachfolgenden Schweißvorgang vorzufahren.
Um diesem Problem zu begegnen, ist es aus der DE-A-1 31 51
077 bekannt, die mechanisch zugeführte Drahtelektrode vor
Zündung des Lichtbogens bis zum Werkstückkontakt vorzubewegen und anschließend selbsttätig bis zum Zünden des Lichtbogens vom Werkstück zurückzuziehen und nach dem Zünden des
Lichtbogens zur Durchführung des Schweißvorganges wieder zum
Werkstück hin zu bewegen. Die Umsteuerung der Elektrodenbewegung vom Vorschub auf Rückzug und umgekehrt erfolgt in Ab-

- 2 -

hängigkeit von der Spannung oder des Stroms im Schweißkreis. Ein derartiges Verfahren ist zum einen aufwendig, erfordert Reversiermotoren, die den Schweißdraht vor- und zurückbewegen und ist darüberhinaus auch sehr zeitaufwendig, da die Zeit für das Vorfahren des Schweißdrahtes, das Zurückziehen und des anschließenden Wiedervorfahrens nicht für den eigentlichen Schweißvorgang zur Verfügung steht.

Des weiteren ist in der europäischen Patentschrift B 1 0 033 312 für eine Schutzgasschweißanlage mit automatischem Drahtvorschub vorgeschlagen worden, die Innen- oder die Außendüse zur Stromzuführung beim Zünden zu verwenden, wobei die Spitze der Düsen mit einem temperaturbeständigen und elektrisch leitenden Überzug versehen sein soll. Des weiteren wird in dieser Druckschrift auch vorgeschlagen, den Zündvorgang mit einer Hochfrequenz oder einer Stromüberlagerung durchzuführen. Hierbei sollen die Teile der Stromdüse bzw. der außen liegenden Gasdüse zur Stromleitung und damit zum Zünden des Lichtbogens mit herangezogen werden.

Darüberhinaus ist es für das WIG- oder TIG-Schweißen bereits seit längerem bekannt, Hochspannungszündgeräte zu verwenden. Diese Hochspannungszündgeräte haben die Aufgabe, einen Lichtbogen zu zünden, um zu vermeiden, daß die Wolframelektroden auf den Stahl oder Aluminium aufstoßen und sich dabei auflegieren. Auch für das Unterpulverschweißen mit verdecktem Lichtbogen (UP) wird gleichfalls der Lichtbogen durch Überlagerung mit einer hochfrequenten Hochspannung gezündet.

Der Erfindung liegt die Aufgabe zugrunde, ein Verfahren für das Zünden des Lichtbogens beim MIG-MAG-Verfahren vorzuschlagen, das ein stoßfreies Zünden des Lichtbogens gewährleistet, wobei sowohl ein mechanisches Aufstoßen der Drahtelektrode auf das Werkstück wie auch ein hoher Kurzschlußstrom beim Zünden vermieden werden sollen.

Diese Aufgabe wird mit den kennzeichnenden Merkmalen des Anspruches 1 gelöst.

Gemäß der Erfindung wird somit eine hochfrequente Hochspannung zwischen dem Werkstück und der Drahtelektrode angelegt, wobei die Zündfrequenz der Vorschubgeschwindigkeit des Drahtes angepaßt ist. Dies bedeutet, daß bei hoher Drahtgeschwindigkeit die Frequenz so gewählt sein muß, daß innerhalb eines Drahtweges von etwa 5 mm mehrfache Zündimpulse abgegeben werden, die ein Zünden des Lichtbogens bewirken, bevor der Draht die Werkstückoberfläche erreicht hat. Durch die auf den Drahtvorschub angepaßte Zündfrequenz ist es auch beim MIG-MAG-Schweißen möglich, ein stoßfreies Zünden des Lichtbogens zu erreichen, und zwar sowohl in mechanischer Hinsicht (Aufstoßen des Drahtes am Werkstück) als auch in elektrischer Hinsicht (großer Kurzschlußstrom), wobei ein hoher Kurzschlußstrom, der das 1,5 - 2-fache der normalen Lichtbogenleistung erreichen kann, auch zu einer Beschädigung der Kontaktdüse führen kann. Durch die Vermeidung des mechanischen Aufstoßens des Drahtes auf das Werkstück wird ein Rückstoß des Drahtes in dem Drahtführungsschlauch vermieden, welcher bis zum Antriebsmotor zurückwirkt und auch die Folge haben kann, daß der Draht innerhalb der Kontaktdüse abhebt und dort einen Lichtbogen ziehen kann, was die Lebensdauer der Stromdüse herabsetzt.

Ein sicheres Zünden des Lichtbogens ist vor allem bei automatisierten Schweißanlagen wie Schweißrobotern notwendig, weil hier wegen der Beweglichkeit der Roboter-Schweißpistole der Draht über relativ lange Schlauchpakete zugeführt wird. Auch für diese automatischen Schweißanlagen ist es von wesentlichem Vorteil, daß keine Schweißzeit verschenkt wird, wie dies beim Stand der Technik der Fall ist, bei der der Draht im Reversierbetrieb zur Zündung des Lichtbogens bewegt wird.

Qualitätsschweißungen, die auch spritzerfrei sein sollen, sind nur mit sicherem Zünden möglich. Bei Zündfehlern fehlt im Anfang ein Teil der Naht, was bei kurzen Nähten sehr schwerwiegende Folgen in der Festigkeit hat.

Die Verschmutzung von Schweißpistole und Werkstücken wird in der normal üblichen Kurzschlußzündung negativ beeinflußt, indem sich sowohl große Schweißperlen als auch ganze Drahtstükke auf dem Werkstück bzw. zwischen den Düsen der Schweißpistole ablagern.

Durch alle diese Vorgänge wird der Schweißrhythmus und die Arbeitsleistung negativ beeinflußt.

Insbesondere für Aluminiumdrähte hat es sich als ausgesprochen vorteilhaft herausgestellt, eine hochfrequente Hochspannung mit der Drahtgeschwindigkeit angepaßter Zündfolge einzusetzen. Es ist somit erstmalig möglich geworden, auch mit derartigen Drähten störungsfrei zu schweißen.

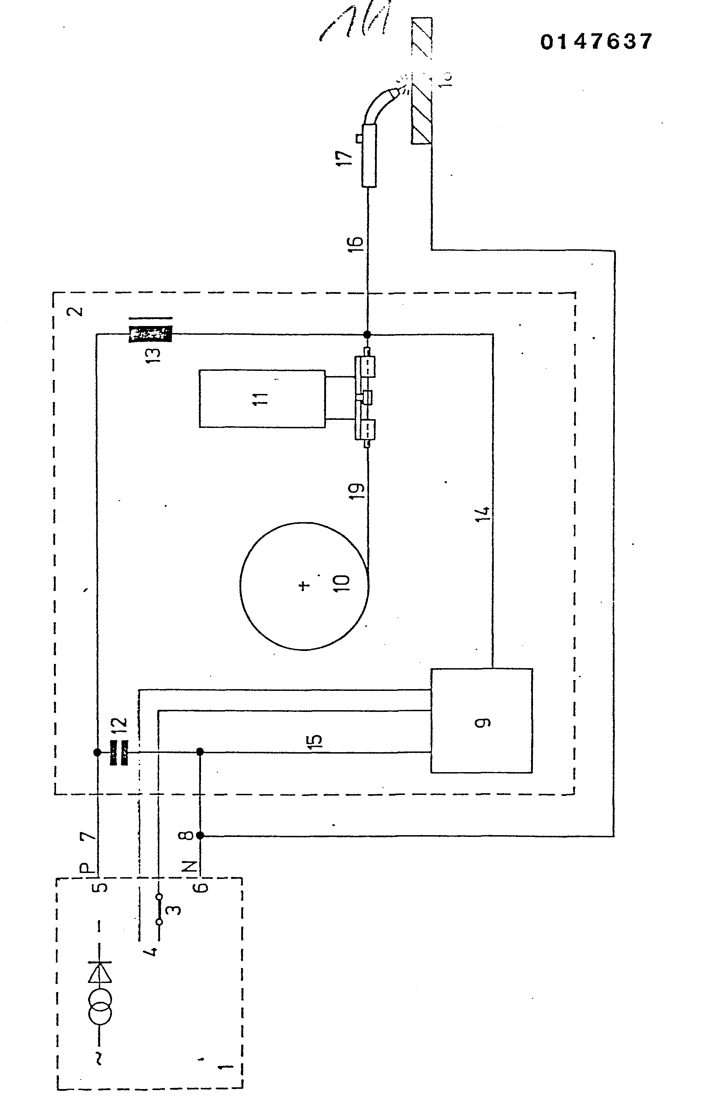

In der Zeichnung ist eine MIG-MAG-Schweißanlage dargestellt, die mit einem Hochspannungszündgerät 9 ausgestattet ist. 1 bezeichnet die MIG-MAG-Stromquelle, während 2 das Drahtantriebsaggregat kennzeichnet. Das Werkstück 18 wird mit einer Schweißpistole 17 geschweißt, wobei der Schweißdraht 19 von einer Drahtvorratsrolle 10 abgewickelt und mittels eines Drahtvorschubmotors mit einem Getriebe und einem Drahtrichtsatz der Schweißpistole 17 über ein Schlauchpaket 16 zugeführt wird. Dem Schweißdraht 19 wird der Schweißstrom über die Zuleitung 7 über eine in der Schweißpistole 17 angeordnete Stromdüse zugeführt. Das Werkstück 18 ist mit dem Minuspol 8 der Stromquelle 1 verbunden. In die Zuleitung 7 ist eine Drossel 13 eingesetzt, die die Aufgabe hat, die hochfrequente Hochspannung gegenüber der MIG-MAG-Stromquelle 1 abzublocken.

Das Hochspannungszündgerät 9 wird über die Leitung 4 und die Leitung 15 mit der Spannungsquelle verbunden. Die Leitung 7 ist mit der Leitung 15 über einen Abblockkondensator 12 verbunden, der gleichfalls zur Abblockung der Hochfrequenz dient. Die vom Hochspannungszündgerät 9 erzeugte impulsförmige Zündspannung wird gleichfalls über die Stromdüse dem Schweißdraht zugeführt und überlagert sich diesem.

Beim Zündvorgang ist das Relais 3 geschlossen, wobei zwischen dem Schweißdraht und dem Werkstück eine hochfrequente Hochspannung anliegt, deren Zündfolge der Drahtvorschubgeschwindigkeit derart angepaßt ist, daß während eines Drahtvorschubs von etwa 5 mm eine Folge von Zündimpulsen abgegeben wird, die den Lichtbogen zünden, ehe der Schweißdraht 19 die Werkstückoberfläche 18 erreicht.

Patentansprüche:


1. Verfahren zum stoßfreien Zünden beim MIG-MAG-Schweißen
von kontinuierlich nachgeführten Drahtelektroden, dadurch
gekennzeichnet, daß zwischen Schweißdraht (19) und Werkstück
(18) eine hochfrequente Hochspannung anliegt, deren Zündfolge so auf die Drahtvorschubgeschwindigkeit abgestellt ist,
daß beim Durchfahren des Drahtes von einer Strecke von ca.
5 mm mehrere Zündimpulse zum Aufbau eines Start-Lichtbogens
abgegeben werden.


2. Verfahren nach Anspruch 1, dadurch gekennzeichnet, daß
die Zündfrequenz 400 Hz. beträgt, die durch aufeinanderfolgende Arbeits- und Pausenzeiten aus einer Hochfrequenz von
100 000 Hz. erhalten wird.